# EUROPEAN PATENT APPLICATION

(11) **EP 3 550 662 A1**
(43) Date of publication of application: **09.10.2019**
(21) Application number: 17876315.7
(22) Date of filing: 29.11.2017
(51) Int. Cl.: H01M 10/613, H01M 10/625, H01M 10/653

(54) **HEAT ABSORPTION AND HEAT INSULATION STRUCTURE OF BATTERY MODULE**

(30) Priority: 29.11.2016 CN 201611069226; 27.11.2017 CN 201711213648
(71) Applicant: Beijing Key Power Technologies Co., Ltd., Beijing 100096 (CN)
(72) Inventor: LI, Liguo, Beijing 100096 (CN); HUA, Jianfeng, Beijing 100096 (CN); TIAN, Shuo, Beijing 100096 (CN)
(74) Representative: Perronace, Andrea
(86) International application number: PCT/CN2017/113558
(87) International publication number: WO 2018/099396

(57) **Abstract**

Provided is a heat absorption and heat insulation structure for a battery module, including: a wrappage, having a first cavity therein; and a heat absorbing agent, disposed in the first cavity, the heat absorbing agent being capable of absorbing heat to generate gas. By applying the technical solution of the present disclosure, after the heat absorption and heat insulation structure is disposed between two adjacent battery cells, if one battery cell experiences thermal runaway, heat generated by the battery cell can be conducted to the heat absorbing agent of the wrappage. The heat absorbing agent will vaporize after absorbing the heat, and the generated gas may carry a large amount of heat to the outside of the battery module, thereby preventing the damaged battery cell from transferring a large amount of heat to the adjacent battery cell and causing further damage. Therefore, by means of the technical solution of the present disclosure, heat conduction between adjacent battery cells can be reduced, and thermal runaway diffusion can be avoided, thereby ensuring the safety of the battery module.

## Description

### Technical Field

The present disclosure relates to a field of electric vehicle battery systems, and in particular to a heat absorption and heat insulation structure for a battery module.

### Background

With the rapid development of new energy vehicles, the safety of battery systems of new energy vehicles has also received more and more attention. The current electric vehicle battery system is formed by connecting a plurality of battery cells in series or in parallel. An insulating film or buffer foam is generally disposed between adjacent battery cells to provide insulation or buffering. However, if a certain battery cell experiences thermal runaway, a surface temperature is too high, and heat will quickly pass through the insulating film or the buffer foam and may be transferred to adjacent cells, thereby causing an expansion of chain thermal runaway, and causing safety accidents such as burning or even explosion.

In order to prevent thermal runaway diffusion and to prevent heat generated by the thermal runaway cells from being transferred to adjacent cells, a heat insulation structure is disposed between two battery cells in a related art. However, it has been proved that it is difficult to provide sufficient space for the heat insulation structure in a dense battery module, and a thin heat insulation structure cannot completely prevent thermal runaway diffusion. In particular, with the increase of the capacity of a single battery cell and the increase of energy density, heat released by the thermal runaway of the battery cell is even greater, a reaction temperature is as high as 700°C above, the heat transfer temperature difference is further increased, and the simple heat insulation structure is becoming hard to meet the requirements of thermal runaway diffusion.

Therefore, how to prevent heat from propagating between adjacent battery cells and avoiding safety accidents has become a difficult problem for those in the field.

### Summary

An embodiment of the present disclosure provides a heat absorption and heat insulation structure for a battery module, intended to solve the problem in the conventional art that adjacent battery cells in a battery module are prone to experience thermal runaway.

In order to solve the above problem, the present disclosure provides a heat absorption and heat insulation structure for a battery module, which may include a battery module with a plurality of battery cells, and may further include: a heat absorbing agent capable of generating gas, the heat absorbing agent being disposed between the plurality of battery cells.

In an exemplary embodiment, the heat absorbing agent is a heat absorbing agent capable of generating gas by a reaction.

In an exemplary embodiment, the heat absorbing agent is a heat absorbing agent capable of absorbing heat by gasification.

In an exemplary embodiment, the heat absorbing agent is a solid, a liquid or a powder.

In an exemplary embodiment, the heat absorbing agent is a hydrated salt phase change material.

In an exemplary embodiment, the heat absorbing agent is a fire extinguishing agent, a silicone oil, or a fluorinated liquid.

In an exemplary embodiment, a container is further included. The container is disposed between the battery cells, and the heat absorbing agent is disposed in the container.

In an exemplary embodiment, the container is a fiber, a foam material, a colloform, a microcapsule or a honeycomb material.

In an exemplary embodiment, the heat absorbing agent is surrounded by a wrappage.

In an exemplary embodiment, the wrappage is openable under a certain pressure.

In an exemplary embodiment, the wrappage is opened with an opening facing upward.

In an exemplary embodiment, the wrappage is made from plastic, metal or an aluminum plastic film.

In an exemplary embodiment, a support is disposed in the wrappage, the support is configured to prevent a housing from expanding and squeezing away the heat absorbing agent when a battery cell in the plurality of battery cells experiences thermal runaway.

The present disclosure provides a heat absorption and heat insulation structure for a battery module, which may include: a wrappage, having a first cavity therein; and a heat absorbing agent, disposed in the first cavity, the heat absorbing agent being capable of absorbing heat to generate gas.

In an exemplary embodiment, the heat absorption and heat insulation structure may further include: a container, configured to store the heat absorbing agent and insulate heat, the container being disposed in the first cavity, the container having multiple second cavities, and the heat absorbing agent being filled in the multiple second cavities.

In an exemplary embodiment, the container is a porous heat insulation material.

In an exemplary embodiment, the heat absorbing agent is an aqueous material, and the container is hydrophilic; or, the heat absorbing agent is an oily material, and the container is lipophilic.

In an exemplary embodiment, the heat absorption and heat insulation structure may further include: a support, configured to support the wrappage, the support being disposed in the first cavity, and the container being disposed between the support and the wrappage.

In an exemplary embodiment, the support may include: multiple cross-connected support plates, dividing the first cavity into multiple sub-cavities, the container being disposed in the multiple sub-chambers.

In an exemplary embodiment, the container is disposed in the first cavity in multiple layers, and the heat absorption and heat insulation structure may further include: a heat conduction layer, disposed between two adjacent layers of the container.

In an exemplary embodiment, an upper portion of the wrappage may have a groove, and gas generated by the heat absorbing agent may open the groove under a certain pressure.

By applying the technical solution of the present disclosure, a heat absorbing agent capable of generating gas during heat absorption is disposed in a wrappage of a heat absorption and heat insulation structure for a battery module. Thus, after the heat absorption and heat insulation structure is disposed between two adjacent battery cells, if one battery cell experiences thermal runaway, heat generated by the battery cell is conducted to the heat absorbing agent of the wrappage. The heat absorbing agent will gasify after absorbing the heat, and the generated gas may carry a large amount of heat to an outside of the battery module, thereby preventing the damaged battery cell from transferring a large amount of heat to the adjacent battery cell and causing further damage. Therefore, by means of the technical solution of the present disclosure, heat conduction between adjacent battery cells can be reduced, and thermal runaway diffusion can be avoided, thereby ensuring the safety of the battery module.

### Brief Description of the Drawings

The accompanying drawings, which constitute a part of this application, are used to provide a further understanding of the present disclosure, and the exemplary embodiments of the present disclosure and the description thereof are used to explain the present disclosure, but do not constitute improper limitations to the present disclosure. In the drawings:
Fig. 1 illustrates a structural schematic diagram of a heat absorption and heat insulation structure for a battery module according to the present disclosure;
Fig. 2 illustrates a structural schematic diagram of a second embodiment of the present disclosure;
Fig. 3 illustrates a front cross-sectional view showing a third embodiment of the present disclosure;
Fig. 4 illustrates a top cross-sectional view showing a third embodiment of the present disclosure;
Fig. 5 illustrates a side cross-sectional view showing a third embodiment of the present disclosure;
Fig. 6 illustrates a use reference diagram of a heat absorption and heat insulation structure for a battery module according to the present disclosure;
Fig. 7 illustrates a temperature change diagram of Test 1 according to the present disclosure; and
Fig. 8 illustrates a temperature change diagram of Test 2 according to the present disclosure.

The drawings include the following reference signs:
1, Battery cell; 2, Sealing bag; 3, Colloid; 4, Foam plastic;
10, Wrappage; 11, Groove; 20, Heat absorbing agent; 30, Container; 40, Support; 50, Heat conduction layer.

### Detailed Description of the Embodiments

The technical solutions in the embodiments of the present disclosure will be clearly and completely described hereinbelow with the drawings in the embodiments of the present disclosure. It is apparent that the described embodiments are only part of the embodiments of the present disclosure, not all of the embodiments. The following description of at least one exemplary embodiment is only illustrative actually, and is not used as any limitation for the present disclosure and the application or use thereof. On the basis of the embodiments of the present disclosure, all other embodiments obtained on the premise of no creative work of those of ordinary skill in the art fall within the scope of protection of the present disclosure.

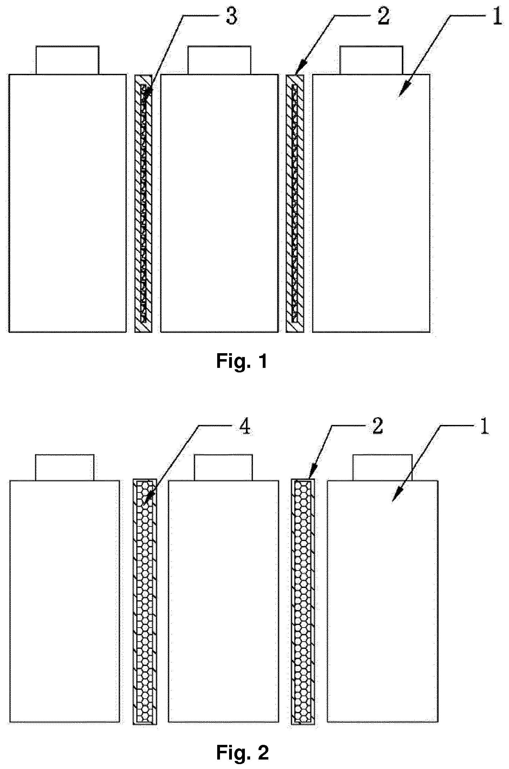

A heat absorption and heat insulation structure for a battery module as shown in Fig. 1 includes a battery module with a plurality of battery cells 1 and a sealing bag 2, the sealing bag 2 is provided with a colloid 3 and a heat absorbing agent capable of generating gas. In an exemplary embodiment, the heat absorbing agent being capable of absorbing heat to generate gas is a silicone oil (cyclic polydimethylsiloxane having a boiling point of 101°C), the silicone oil is contained in the colloid 3. In an exemplary embodiment, the sealing bag 2 is made from plastic. When the battery cell 1 experiences thermal runaway, a great amount of heat is generated, and the temperature is also sharply increased. When the temperature rises above the boiling point of the silicone oil by 101 °C, the silicone oil in the sealing bag 2 gasifies to absorb the great amount of heat of the battery cell 1, and absorbs heat generated by a heat source around the battery cell 1, thereby preventing accidents such as burning or even explosion caused by overheating of the battery cell 1.

A heat absorption and heat insulation structure for a battery module according to a second embodiment of the present disclosure as shown in Fig. 2 includes a battery module with a plurality of battery cells 1 and a sealing bag 2. Foamed plastic 4 is disposed in the sealing bag 2. Silicone oil is disposed in the foamed plastic 4. The foamed plastic 4 has certain strength, serves as a support of the silicone oil, and may achieve a supporting effect during the thermal runaway expansion of the battery cell 1, thereby preventing the silicone oil in the sealing bag 2 from being squeezed away by a housing of the battery cell 1.

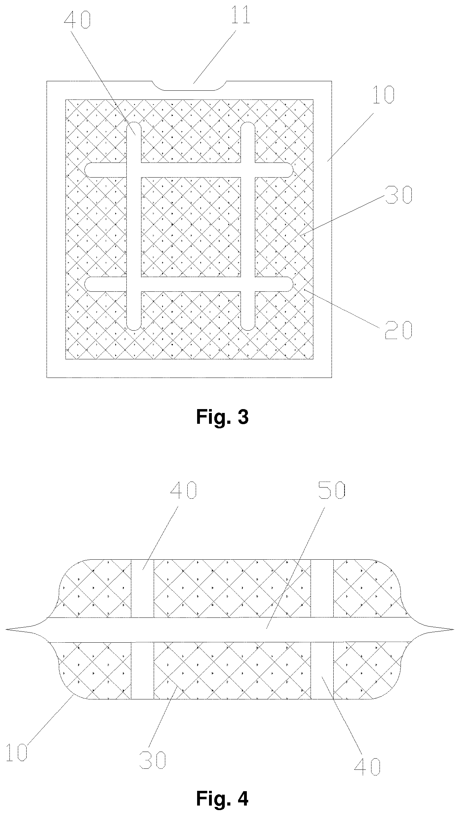

As shown in Fig. 3 to Fig. 6, a third embodiment of the present disclosure provides a heat absorption and heat insulation structure for a battery module. The heat absorption and heat insulation structure includes a wrappage 10 and a heat absorbing agent 20. The wrappage 10 has a first cavity. The heat absorbing agent 20 is disposed in the first cavity, and the heat absorbing agent 20 is capable of absorbing heat to generate gas.

By applying the technical solution of the present embodiment, the heat absorbing agent 20 capable of generating gas during heat absorption is disposed in the wrappage 10 of a heat absorption and heat insulation structure for a battery module. Thus, after the heat absorption and heat insulation structure is disposed between two adjacent battery cells, if one battery cell experiences thermal runaway, heat generated by the battery cell is conducted to the heat absorbing agent 20 of the wrappage 10. The heat absorbing agent 20 will gasify after absorbing the heat, and the generated gas carries a large amount of heat to the outside of the battery module, thereby preventing the damaged battery cell from transferring a large amount of heat to the adjacent battery cell and causing further damage. Therefore, by means of the technical solution of the present disclosure, heat conduction between adjacent battery cells can be reduced, and thermal runaway diffusion can be avoided, thereby ensuring the safety of the battery module.

In an exemplary embodiment, the heat absorption and heat insulation structure not only has a function of heat insulation but also has a function of rapidly dissipating heat by a gasification reaction. Thus, heat of a battery cell experiencing thermal runaway can be prevented from being transferred to the adjacent battery cell in conjunction with a manner of bringing heat of the battery cell experiencing the thermal runaway to the outside of the battery module and a manner of heat insulation, thereby ensuring the safety of adjacent battery cells and avoiding safety accidents. Moreover, since the heat absorption and heat insulation structure provided by the present embodiment has high heat absorption and heat insulation performance, the effect of preventing thermal runaway diffusion can be achieved in a case where the thickness is relatively small, and therefore, the technical solution of the present embodiment can also improve the compactness of the battery module and reduce the volume of the battery module.

In an exemplary embodiment, the heat absorbing agent 20 is made of a solid, a liquid or a powder. In order to improve the effect of heat absorption, the heat absorbing agent 20 should be selected from a gasifiable high latent heat phase change heat absorbing material. When using a liquid material, the liquid material should be selected such that a boiling point of the liquid is above the normal operating temperature of the battery module to ensure that heat absorbing gasification occurs when a large amount of heat is abnormally generated in the battery cell. For example, the heat absorbing agent 20 is provided as a fluorinated liquid, a silicone oil, water or a hydrogel. The fluorinated liquid is non-conductive, non-flammable, and not prone to react with the structure inside the battery module, so a metal structure cannot be corroded. The silicone oil is non-conductive, high in flash point, non-flammable, and not prone to react with the structure inside the battery module, so a metal structure cannot be corroded. The water or the hydrogel is low in cost and non-flammable, but conducts electricity and corrodes the metal structure in the event of leakage. Thus, it is necessary to improve the sealing reliability of the wrappage 10.

The heat absorbing agent 20 can also be set as a hydrated salt phase change material or a fire extinguishing agent. Wherein, the hydrated phase change material is a hydrate, such as an inorganic phase change material Na₂SO₄•10H₂O, which melts at 32.4°C, absorbs a large amount of heat during a process of melting into an aqueous solution, and gasifies to take away a large amount of heat during further heat absorption. It is applied to the heat absorption and heat insulation structure, when the battery module operates normally to generate heat, the temperature of the battery module is reduced through heat absorption of the heat absorbing agent 20 adopting the heat absorbing agent 20 changes from solid phase to liquid phase, and when the thermal runaway occurs, the temperature is reduced by the gasification and heat absorption of the liquid.

When the heat absorbing agent 20 is set as a fire extinguishing agent, a dry powder fire extinguishing agent or a liquid fire extinguishing agent can be used. The dry powder fire extinguishing agent absorbs heat and decomposes, and can produce CO₂ flame retardant gas, so it has heat absorption and fire extinguishing effects, but there will be certain solid residue. The liquid fire extinguishing agent can be selected from tetrafluorodibromoethane. The tetrafluorodibromoethane is non-conductive, non-flammable, and not prone to react with the structure inside the battery module, cannot corrode the metal structure, but has a low boiling point, and requires pressurized packaging.

As shown in Fig. 3 to Fig. 6, the heat absorption and heat insulation structure further includes a container 30. The container 30 is configured to store the heat absorbing agent 20 and insulate heat, the container 30 is disposed in the first cavity, the container 30 has a plurality of second cavities, and the heat absorbing agent 20 is filled in the plurality of second cavities. When the heat absorbing agent 20 absorbs heat and gasifies and the heat absorbing agent 20 is discharged to the battery module, a large amount of heat released by the damaged battery cell can be taken away, and then the container 30 remains in the wrappage 10, so that the effect of heat insulation can be continued through the container 30. The arrangement can make the heat absorption and heat insulation structure have a better heat insulation effect, thereby better preventing from transferring heat to the adjacent battery cell by the battery cell experiencing thermal runaway, thereby ensuring the safety of the battery module. Moreover, such an arrangement can provide a good heat absorption and heat insulation effect in a case where the installation space is small, so that the safety and compactness of the battery module can be improved.

In an exemplary embodiment, the container 30 is configured as a structure having a plurality of small holes or gaps therein, the holes or gaps are the second cavities, and the heat absorbing agent 20 is filled in the holes or the gaps, so that the container 30 can use a capillary action or an adhesive action to make the heat absorbing agent 20 distributed inside the container 30, and the container 30 is less likely to accumulate and flow. When the heat absorbing agent 20 gasifies to absorb heat and the heat absorbing agent 20 is discharged, air can be prevented from flowing by the separation of the holes or the gaps, thereby achieving the heat insulation effect. Moreover, in an exemplary embodiment, the holes or the gaps of the container 30 are arranged to communicate with each other, which can facilitate sufficient filling of the heat absorbing agent 20 and sufficient discharge of gas and heat.

In an exemplary embodiment, the container 30 is provided as a porous or fibrous heat insulation material such as glass fiber heat insulation cotton, ceramic fiber heat insulation cotton, silica aerogel felt or silica aerogel. The heat absorbing agent 20 is filled or impregnated into the heat insulation material by a certain treatment process, so that the heat absorbing agent 20 is sufficiently combined with the heat insulation material. Attention should be paid to the matching of material properties when selecting materials. For example, a hydrophilic heat insulation material is used for an aqueous heat absorbing agent 20, and a lipophilic heat insulation material is used for an oily heat absorbing agent 20. When the heat absorbing agent 20 is a solid or a powder, the heat insulation material is not required to have good hydrophilicity or lipophilicity. Such an arrangement can increase the bonding effect of the heat absorbing agent 20 and the heat insulation material, thereby improving the performance of the heat absorption and heat insulation structure.

It is to be noted that in general, the heat insulation material generally requires hydrophobic and resistant to water vapor infiltration. This is because the heat conductivity of water is much higher than the heat conductivity of the heat insulation material. In the conventional environment, if the heat insulation material absorbs water, the heat conductivity increases, which affects the heat insulation properties of the heat insulation material. In an exemplary embodiment, the heat insulation material is used at a relatively high temperature, the hydrophobicity of the heat insulation material is not emphasized, and for the liquid heat absorbing agent 20, the heat insulation material needs to have good hydrophilicity or lipophilicity. Moreover, in order to increase the bonding effect of the heat absorbing agent 20 and the heat insulation material. In an exemplary embodiment, the heat insulation material should have good permeability.

As shown in Fig. 3 and Fig. 4, the heat absorption and heat insulation structure further includes a support 40. The support 40 is configured to support the wrappage 10, the support 40 is disposed in the first cavity, and the container 30 is disposed between the support 40 and the wrappage 10. The wrappage 10 is supported by providing the support 40 to enhance the overall structural strength of the heat absorption and heat insulation structure. The battery cell expands in the case of thermal runaway, which prevents the expansion of the battery cell from directly extruding the heat absorbing agent 20 in the wrappage 10 out of the wrappage 10 and does not have the desired heat absorption effect. Therefore, the reliability of the heat absorption and heat insulation structure can be improved by providing the support 40 to ensure the heat absorption and heat insulation effect of the heat absorption and heat insulation structure. The material of the support 40 may be selected from materials such as plastic or ceramics having higher strength.

In an exemplary embodiment, the support 40 includes a plurality of cross-connected support plates, dividing the first cavity into multiple sub-cavities, the container 30 is disposed in the multiple sub-chambers. Such an arrangement allows the plurality of support plates to be distributed to different positions of the wrappage 10, thereby forming an effective support for different positions of the wrappage 10. Moreover, on the one hand, the cross-connection of the plurality of support plates can improve the structural strength of the support 40, and on the other hand, the volume of the support 40 can be reduced, so that more heat absorbing agents 20 are provided in the limited first cavity. In this way, the heat absorption and heat insulation structure can have both good heat absorbing and heat insulating properties and high structural strength.

As shown in Fig. 4, upper and lower sidewalls of the wrappage 10 of the heat absorption and heat insulation structure are understood to be used for connection or abutment with the battery cells. An upper end surface of the support 40 is connected or abutted to the upper side wall of the wrappage 10, and a lower end surface of the support 40 is connected or abutted to the lower side wall of the wrappage 10, so that the wrappage 10 can be better supported to prevent the heat absorbing agent 20 in the wrappage 10 from being squeezed out.

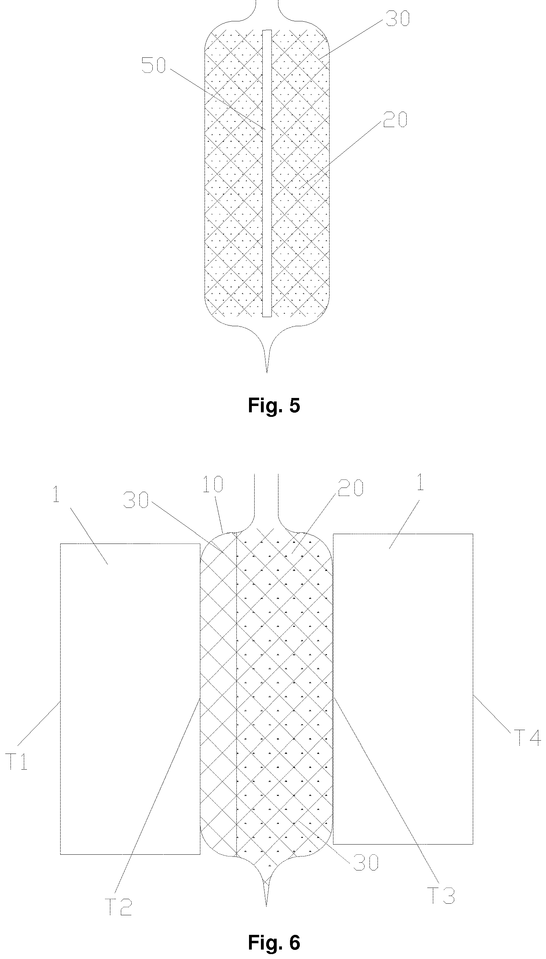

As shown in Fig. 4 and Fig. 5, in an exemplary embodiment, the container 30 is disposed in the first cavity in multiple layers, and the heat absorption and heat insulation structure further includes a heat conduction layer 50, wherein the heat conduction layer 50 is disposed between two adjacent layers of the container 30. Thus, the heat conduction layer 50 can be in contact with the heat absorbing agent 20 at different positions in the wrappage 10. When the battery cell is inflated and cannot be sufficiently contacted with the wrappage 10, heat cannot be uniformly transferred to the wrappage 10. At this time, the heat can be transferred to the heat absorbing agent 20 at different positions sufficiently through the heat conduction layer 50, so that the heat absorbing agent 20 at different positions can absorb heat and gasify, and can prevent the local heat absorbing agent 20 from transferring excessive heat to the adjacent battery cell since it is exhausted and cannot effectively absorb heat. Therefore, by providing the heat conduction layer 50, the heat transfer uniformity of the heat absorption and heat insulation structure can be improved, thereby better achieving the effects of heat absorption gasification and heat release, and improving the safety of the battery module. The material of the heat conduction layer 50 may be selected from a metal material having good heat conductivity or a material such as graphite.

As shown in Fig. 3, an upper portion of the wrappage 10 has a groove 11, and gas generated by the heat absorbing agent 20 is capable of opening the groove 11 under a certain pressure. At the position of the groove 11, the strength of the wrappage 10 is low, so that when the heat absorbing agent 20 absorbs heat to generate gas, the pressure inside the wrappage rises, and when a predetermined value is reached, the gas will open the groove 11 and an opening is formed. In this way, when the battery module operates normally, the sealing property of the heat absorption and heat insulation structure can be ensured, and in the case of thermal runaway of the battery cell of the battery module, the heat absorbing agent and the heat can be discharged after gasification. Moreover, such an arrangement can discharge the gas from the predetermined position, that is, the upper portion of the wrappage 10, which can facilitate the setting of a discharge path of the gas and reduce the length of the discharge path.

In an exemplary embodiment, the material of the wrappage 10 may be selected from plastic, metal or aluminum plastic films. For example, the wrappage 10 is set as a plastic packaging bag sealed by a hot pressing process. The thickness of the plastic is set to be thinner than the other positions at the position of the groove 11, or the strength of hot pressing is set lower to achieve the orientation opening at the groove 11. The opening pressure of the wrappage 10 at the groove 11 is set according to the material properties of the wrappage 10 and the heat absorbing agent 20.

In order to facilitate the understanding of the working principle of the heat absorption and heat insulation structure provided by the present disclosure, the working process of the heat absorption and heat insulation structure will be described below with reference to Fig. 6.

As shown in Fig. 6, a left side wall of the heat absorption and heat insulation structure is understood to be provided with a thermal runaway battery cell, and a right side wall of the heat absorption and heat insulation structure is provided with a normal battery cell. The heat released by the left battery cell is preferentially conducted to the container 30 on the left side of the first cavity, and the heat absorption agent 20 in the container 30 absorbs heat and gasifies. When the gas reaches a certain pressure, the upper portion of the wrappage 10 is opened and an opening is formed such that the gas carries a large amount of heat to be discharged from the opening, thereby preventing heat of the left battery cell from being conducted to the right battery cell. After some or all of the heat absorbing agent 20 in the container 30 gasifies, the container 30 remains to act as a heat insulator, thereby further blocking the conduction of heat from the left battery cell to the right battery cell. Therefore, by means of the technical solution of the present disclosure, heat conduction between adjacent battery cells can be reduced, and thermal runaway diffusion can be avoided, thereby ensuring the safety of the battery module.

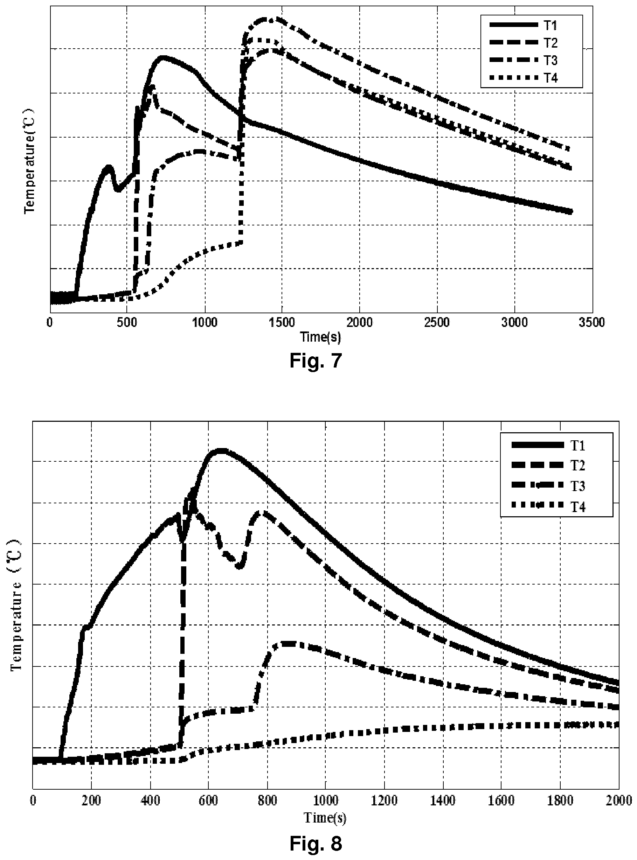

In order to facilitate the understanding of the practical use effect of the heat absorption and heat insulation structure provided by the present disclosure, the following description will be made through comparative experiments:
As shown in Fig. 6, different heat absorption and heat insulation structures are disposed between two adjacent battery cells 1, the left battery cell 1 experiences thermal runaway by heating, and at four different measuring points in the figure, the temperature changes of T1, T2, T3, and T4 are measured separately.
Test 1: Heat insulation is carried out by using ordinary glass fiber heat insulation cotton having the thickness of 1 mm between two battery cells. A temperature change curve is shown in Fig. 7, in which a vertical coordinate represents temperature and an abscissa represents time. Heating starts at about 200s; when the temperature T1 of the left battery cell rises to about 300°C at 550s under heating, thermal runaway occurs; a surface temperature of the right battery cell gradually rises, at about 700s after the left battery cell experiences thermal runaway, thermal runaway has occurred. Therefore, the ordinary heat absorption and heat insulation structure can slow down the conduction of heat to a certain extent, and can delay the process of thermal runaway, but cannot completely prevent the thermal runaway diffusion.
Test 2: A heat absorption and heat insulation structure, having a thickness of 1mm, provided by an embodiment of the present disclosure is used between two adjacent battery cells: glass fiber heat insulation cotton containing the heat absorbing agent 20 is disposed in the wrappage 10. The temperature change curve is shown in Fig. 8, in which a vertical coordinate represents temperature and an abscissa represents time. Heating starts at about 200s; when the temperature T1 of the left battery cell rises to about 300°C at 550s under heating, thermal runaway occurs; the heat absorption temperature of the heat absorbing agent 20 rises rapidly, when the surface temperature of the right battery cell rises to the phase change temperature of the heat absorbing agent 20, the rising begins to slow down, after the heat absorbing agent 20 is exhausted, the surface temperature of the right battery cell continues to rise, but since the heat absorbing agent 20 takes away a large amount of heat and the container 30 has a heat insulation effect, the temperature of the right battery cell does not rise to the trigger temperature at which thermal runaway occurs, and the right battery cell does not eventually experience thermal runaway.

It can be known from the above comparison test that by means of the heat absorption and heat insulation structure provided by the present disclosure, heat conduction between adjacent battery cells can be effectively reduced, and thermal runaway diffusion can be avoided, thereby ensuring the safety of the battery module.

The above is only the preferred embodiments of the present disclosure, not intended to limit the present disclosure. As will occur to those skilled in the art, the present disclosure is susceptible to various modifications and changes. Any modifications, equivalent replacements, improvements and the like made within the spirit and principle of the present disclosure shall fall within the scope of protection of the present disclosure.

It is to be noted that terms used herein only aim to describe specific implementation manners, and are not intended to limit exemplar implementations of this application. Unless otherwise directed by the context, singular forms of terms used herein are intended to include plural forms. Besides, it will be also appreciated that when terms "contain" and/or "include" are used in the description, it is indicated that features, steps, operations, devices, assemblies and/or a combination thereof exist.

Unless otherwise specified, relative arrangements of components and steps elaborated in these embodiments, numeric expressions and numeric values do not limit the scope of the present disclosure. Furthermore, it should be understood that for ease of descriptions, the size of each part shown in the drawings is not drawn in accordance with an actual proportional relation. Technologies, methods and devices known by those skilled in the related art may not be discussed in detail. However, where appropriate, the technologies, the methods and the devices shall be regarded as part of the authorized description. In all examples shown and discussed herein, any specific values shall be interpreted as only exemplar values instead of limited values. Therefore, other examples of the exemplar embodiments may have different values. It is to be noted that similar marks and letters represent similar items in the following drawings. Therefore, once a certain item is defined in one drawing, it is unnecessary to further discus the certain item in the subsequent drawings.

In the descriptions of the present disclosure, it will be appreciated that locative or positional relations indicated by "front, back, up, down, left, and right", "horizontal, vertical, perpendicular, and horizontal", "top and bottom" and other terms are locative or positional relations shown on the basis of the drawings, which are only intended to make it convenient to describe the present disclosure and to simplify the descriptions without indicating or impliedly indicating that the referring device or element must have a specific location and must be constructed and operated with the specific location, and accordingly it cannot be understood as limitations to the present disclosure. The nouns of locality "inner and outer" refer to the inner and outer contours of each component.

For ease of description, spatial relative terms such as "over", "above", "on an upper surface" and "upper" may be used herein for describing a spatial position relation between a device or feature and other devices or features shown in the drawings. It will be appreciated that the spatial relative terms aim to contain different orientations in usage or operation besides the orientations of the devices described in the drawings. For example, if the devices in the drawings are inverted, devices described as "above other devices or structures" or "over other devices or structures" will be located as "below other devices or structures" or "under other devices or structures". Thus, an exemplar term "above" may include two orientations namely "above" and "below". The device may be located in other different modes (rotated by 90 degrees or located in other orientations), and spatial relative descriptions used herein are correspondingly explained.

In addition, it is to be noted that terms "first", "second" and the like are used to limit parts, and are only intended to distinguish corresponding parts. If there are no otherwise statements, the above terms do not have special meanings, such that they cannot be understood as limits to the scope of protection of the present disclosure.

## Claims

1. A heat absorption and heat insulation structure for a battery module, comprising a battery module with a plurality of battery cells, and further comprising: a heat absorbing agent capable of generating gas, the heat absorbing agent being disposed between the plurality of battery cells.

2. The heat absorption and heat insulation structure for a battery module as claimed in claim 1, wherein the heat absorbing agent is a heat absorbing agent capable of generating gas by a reaction.

3. The heat absorption and heat insulation structure for a battery module as claimed in claim 1, wherein the heat absorbing agent is a heat absorbing agent capable of absorbing heat by gasification.

4. The heat absorption and heat insulation structure for a battery module as claimed in claim 1, wherein the heat absorbing agent is a solid, a liquid or a powder.

5. The heat absorption and heat insulation structure for a battery module as claimed in claim 1, wherein the heat absorbing agent is a hydrated salt phase change material.

6. The heat absorption and heat insulation structure for a battery module as claimed in claim 1, wherein the heat absorbing agent is a fire extinguishing agent, a silicone oil, or a fluorinated liquid.

7. The heat absorption and heat insulation structure for a battery module as claimed in claim 1, further comprising a container, wherein the container is disposed between the battery cells, and the heat absorbing agent is disposed in the container.

8. The heat absorption and heat insulation structure for a battery module as claimed in claim 7, wherein the container is a fiber, a foam material, a colloform, a microcapsule or a honeycomb material.

9. The heat absorption and heat insulation structure for a battery module as claimed in claim 1, wherein the heat absorbing agent is surrounded by a wrappage.

10. The heat absorption and heat insulation structure for a battery module as claimed in claim 9, wherein the wrappage is openable under a certain pressure.

11. The heat absorption and heat insulation structure for a battery module as claimed in claim 9, wherein the wrappage is opened with an opening facing upward.

12. The heat absorption and heat insulation structure for a battery module as claimed in claim 9, wherein the wrappage is made from plastic, metal or an aluminum plastic film.

13. The heat absorption and heat insulation structure for a battery module as claimed in claim 9, wherein a support is disposed in the wrappage, the support is configured to prevent a housing from expanding and squeezing away the heat absorbing agent when a battery cell in the plurality of battery cells experiences thermal runaway.

14. A heat absorption and heat insulation structure for a battery module, comprising:
a wrappage (10), the wrappage (10) having a first cavity therein; and
a heat absorbing agent (20), disposed in the first cavity, the heat absorbing agent (20) being capable of absorbing heat to generate gas.

15. The heat absorption and heat insulation structure for a battery module as claimed in claim 14, further comprising:
a container (30), configured to store the heat absorbing agent (20) and insulate heat, the container (30) being disposed in the first cavity, the container (30) having a plurality of second cavities, and the heat absorbing agent (20) being filled in the plurality of second cavities.

16. The heat absorption and heat insulation structure for a battery module as claimed in claim 15, wherein the container (30) is a porous heat insulation material.

17. The heat absorption and heat insulation structure for a battery module as claimed in claim 15, wherein
the heat absorbing agent (20) is an aqueous material, and the container (30) is hydrophilic; or,
the heat absorbing agent (20) is an oily material, and the container (30) is lipophilic.

18. The heat absorption and heat insulation structure for a battery module as claimed in claim 15, further comprising:
a support (40), configured to support the wrappage (10), the support (40) being disposed in the first cavity, and the container (30) being disposed between the support (40) and the wrappage (10).

19. The heat absorption and heat insulation structure for a battery module as claimed in claim 18, wherein the support (40) comprises:
a plurality of cross-connected support plates, the plurality of support plates dividing the first cavity into a plurality of sub-cavities, and the container (30) being disposed in the plurality of sub-chambers.

20. The heat absorption and heat insulation structure for a battery module as claimed in claim 15, wherein the container (30) is disposed in the first cavity in multiple layers, the heat absorption and heat insulation structure further comprising:
a heat conduction layer (50), the heat conduction layer (50) being disposed between two adjacent layers of the container (30).

21. The heat absorption and heat insulation structure for a battery module as claimed in claim 14, wherein an upper portion of the wrappage (10) has a groove (11), and gas generated by the heat absorbing agent (20) is capable of opening the groove (11) under a certain pressure.
